# EUROPEAN PATENT APPLICATION

(11) **EP 1 495 825 A2**
(43) Date of publication of application: **12.01.2005**
(21) Application number: 04015875.0
(22) Date of filing: 06.07.2004
(51) Int. Cl.: B23K 1/00

(54) **Brazing method**

(30) Priority: 07.07.2003 JP 2003271462
(71) Applicant: Denso Corporation, Kariya-city, Aichi-pref., 448-8661 (JP)
(72) Inventor: Hattori, Takashi c/o DENSO CORPORATION, Kariya-city Aichi-pref.448-8661 (JP); Tarui, Hiroki c/o DENSO CORPORATION, Kariya-city Aichi-pref.448-8661 (JP); Ogawa, Hiroshi c/o DENSO CORPORATION, Kariya-city Aichi-pref.448-8661 (JP); Ohara, Hirotaka c/o DENSO CORPORATION, Kariya-city Aichi-pref.448-8661 (JP)
(74) Representative: Klingseisen, Franz, Dipl.-Ing.

(57) **Abstract**

A brazing method for brazing components (110-114, 120, 121, 130, 131) is provided. The method includes the steps of: coating a bonding portion between the components (110-114, 120, 121, 130, 131) with a brazing material (1) made of Cu-Sn-Ni-P alloy; introducing reducing gas into a brazing furnace; mounting the components (110-114, 120, 121, 130, 131) in the brazing furnace; and increasing temperature in the brazing furnace so that the components (110-114, 120, 121, 130, 131) are brazed. The brazing method provides excellent bonding condition. Specifically, the brazing material steadily penetrates into the bonding portion between the components (110-114, 120, 121, 130, 131) so that the components (110-114, 120, 121, 130, 131) are brazed steadily.

## Description

The present invention relates to a brazing method for providing excellent bonding condition.

A conventional brazing method for a heat exchanger is disclosed in Japanese Patent Application Publication No. H10-286666. In the method, a surface of a fin, a tube or a plate is clad (i. e. , coated) with a brazing material, and then, both of them are assembled. After that, a heat treatment is performed so that they are brazed.

Specifically, the brazing material is composed of Cu, 6 to 15wt.% of Sn, 5 to 7 wt.% of Ni, and 5 to 8 wt.% of P so that the melting point of the brazing material is lowered. Further, the heat treatment is performed in inert gas atmosphere such as nitrogen gas or argon gas at a temperature between 680°C and 700°C during three minutes. Thus, the method provides excellent operating efficiency, safety, and low cost.

However, it is required that the brazing material steadily penetrates between components so that the components are steadily bonded. Specifically, a portion (e.g., a bonding portion between a tube and a tank) necessitates water-tightness or air-tightness of inner fluid in the heat exchanger. In some cases where the surface of the component is covered with an oxide film having a certain production state, the oxide film is not removed by a reducing function of phosphorous in the brazing material. Thus, the penetration (i.e., fluidity) of the brazing material is deteriorated by the oxide film. Therefore, to improve the penetration (i.e., fluidity) of the brazing material, a flux is necessitated. However, when the flux is used in the brazing method, a cost of the flux is added. Further, additional processes for applying the flux and for removing the flux after brazing are necessitated so that a manufacturing cost is increased.

In view of the above problem, it is an object of the present invention to provide a brazing method for providing excellent bonding state. Specifically, in the method, a brazing material of Cu-Sn-Ni-P alloy is used without any flux.

A brazing method for brazing components is provided. The method includes the steps of: coating a bonding portion between the components with a brazing material made of Cu-Sn-Ni-P alloy; introducing reducing gas into a brazing furnace; mounting the components in the brazing furnace; and increasing temperature in the brazing furnace so that the components are brazed.

In the above method, the reducing gas can remove an oxide film disposed on the surfaces of the components without using a flux. Thus, the brazing material steadily penetrates into the bonding portion between the components so that the components are brazed steadily.

Preferably, the components are a part of a heat exchanger, in which inner fluid flows.

In this case, the brazing method is suitably used for the heat exchanger, which necessitates water-tightness or air-tightness by the brazing method.

Preferably, the brazing material is made of Cu, 6 to 15wt.% of Sn, 5 to 7 wt.% of Ni, and 5 to 8 wt.% of P.

Preferably, the temperature in the brazing furnace after the step of increasing the temperature is in a range between 600°C and 800°C.

The above and other objects, features and advantages of the present invention will become more apparent from the following detailed description made with reference to the accompanying drawings. In the drawings:
Fig. 1A is a front view showing a radiator, and Fig. 1B is a side view showing the radiator according to a preferred embodiment of the present invention;
Fig. 2A is a cross sectional view showing the radiator taken along line IIA-IIA in Fig. 1B, and Fig. 2B is a view on arrow IIB in Fig. 2A;
Fig. 3 is a front view showing test pieces for testing penetration of a brazing material; and
Fig. 4 is a graph explaining a test result.

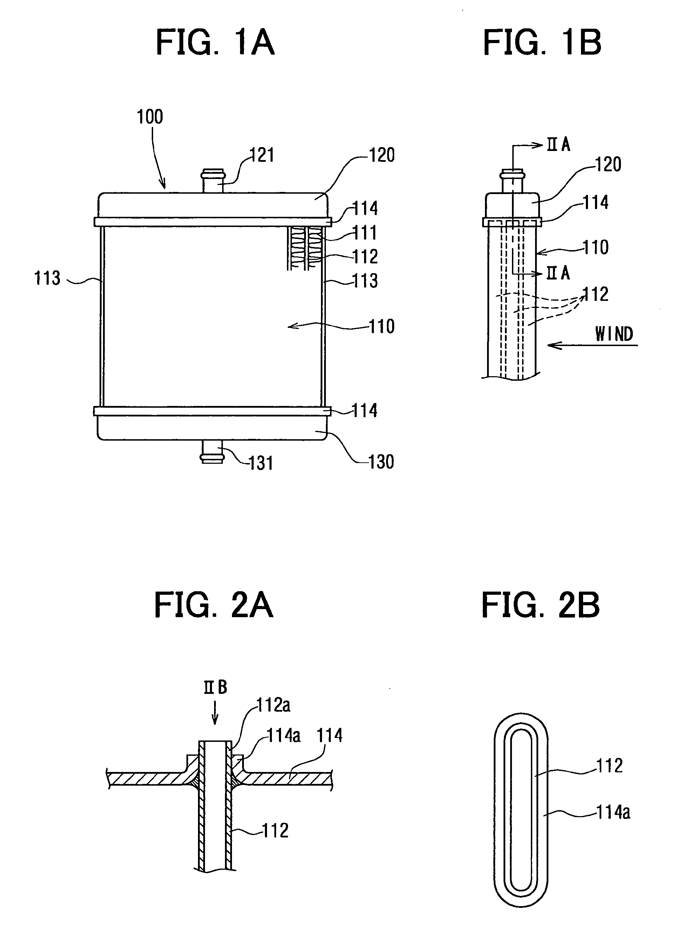

A brazing method according to a preferred embodiment is provided. The method is suitably used for a heat exchanger made of copper or copper alloy. In the preferred embodiment, the brazing method is applied to a radiator 100 for cooling an engine (not shown) of a construction machine, as shown in Figs. 1A to 2B.

Here, in components (which is described in detail as follows) of the radiator 100, a fin 111 is made of copper based material, and other components are made of brass based material. The fin 111 and other components are bonded together by the brazing method with a copper based brazing material (described in detail later).

The radiator 100 is composed of a core 110, an upper tank 120, and a lower tank 130. The core 110 is a heat exchanger for cooling coolant water (i.e., the inner fluid flowing through the radiator 100) discharged from the engine. The core 110 is composed of a fin 111, a tube 112, a side plate 113 and a core plate 114.

The fin 111 is a heat radiator for radiating heat of the coolant water to a cooling wind side effectively. The fin 111 is formed from a thin band plate into a corrugated plate. The tube 112 is a member for passing the coolant water inside thereof. The tube 112 is formed such that the thin band plate is folded to be a flat oval in a cross section thereof, and then, both edges of the thin band plate are welded. The fin 111 and the tube 112 are alternately laminated so that they are aligned in a left-right direction in Fig. 1A. A side plate 113 as a reinforcing member is disposed outside of the outermost laminated fin 111 in the laminated fins 111, which is disposed outermost in the laminated direction. Here, multiple allays (e.g., three allays) of the tube 112 are formed in a flowing direction of the cooling wind in Fig. 1B.

The core plate 114 is a shallow box shaped component having a standing periphery for engaging with the opening of each of the upper and lower tanks 120, 130. The core plate 114 is formed from a flat plate by a folding method or a drawing method. Multiple burring holes 114a are formed in a part of the core plate 114, which corresponds to an edge of the tube 112 (i.e., a tube edge 112a) in a longitudinal direction. The burring hole 114a has a flange protruding to the inside of the tank. The tube edge 112a is inserted into the burring hole 114a. The fin 111, the tube 112, the side plate 113 and the core plate 114 are brazed at each connecting portion.

The upper and lower tanks 120, 130 are box shaped vessels having the opening disposed on a core plate 114 side. The opening of the tank 120, 130 is brazed with the core plate 114 so that they are brazed. An inlet pipe 121 and an outlet pipe 131 are brazed on each surface of the tanks 120, 130 disposed on an opposite tube side (i.e., a top or bottom surface of the tank 120, 130), respectively. The inlet pipe 121 and the outlet pipe 131 connect to the inside of the tanks 120, 130, respectively. Thus, the radiator 100 is completed.

The coolant water discharged from the engine is introduced into the radiator through the inlet pipe 121, and then, the coolant water flows through the upper tank 120, the core 110 (i. e. , the tube 112), and the lower tank 130. Then, the coolant water flows out of the radiator 100 through the outlet pipe 131. The coolant water is cooled while flowing through the radiator 100.

The brazing method of the radiator 100 according to the preferred embodiment is described as follows.

The brazing material is made of alloy composing copper (i.e., Cu), tin (i.e., Sn), nickel (i.e., Ni), and phosphorous (i.e., P). Each weight percentage is, for example, 75% of copper, 15% of tin, 5% of nickel and 5% of phosphorous, respectively. The melting point of the brazing material is about 600°C.

The brazing material is preliminarily applied on each surface of the components (112-114, 120, 121, 130, 131) except for the fin 111. Then, the components (111-114, 120, 121, 130, 131) are engaged together and they are fixed by a jig so that the radiator 100 is temporarily assembled.

Then, the temporary assembly of the radiator 100 is disposed in a brazing furnace so that the components (111-114, 120, 121, 130, 131) are integrally brazed. Here, hydrogen gas (i.e., H₂) as reducing gas is introduced into the brazing furnace. Brazing temperature condition is in a range between 600°C and 800°C.

Thus, an oxide film disposed on the surfaces of the components (111-114, 120, 121, 130, 131) is removed by the reducing gas (i.e., the hydrogen gas) without using a flux. Thus, the brazing material steadily penetrates into each bonding portion between the components (111-114, 120, 121, 130, 131) so that the excellent brazing condition is obtained. Specifically, the brazing method is suitably used for the radiator (i.e. , the heat exchanger) 100, which necessitates the water-tightness or air-tightness between the tube 112 and the core plate 114 by the brazing method.

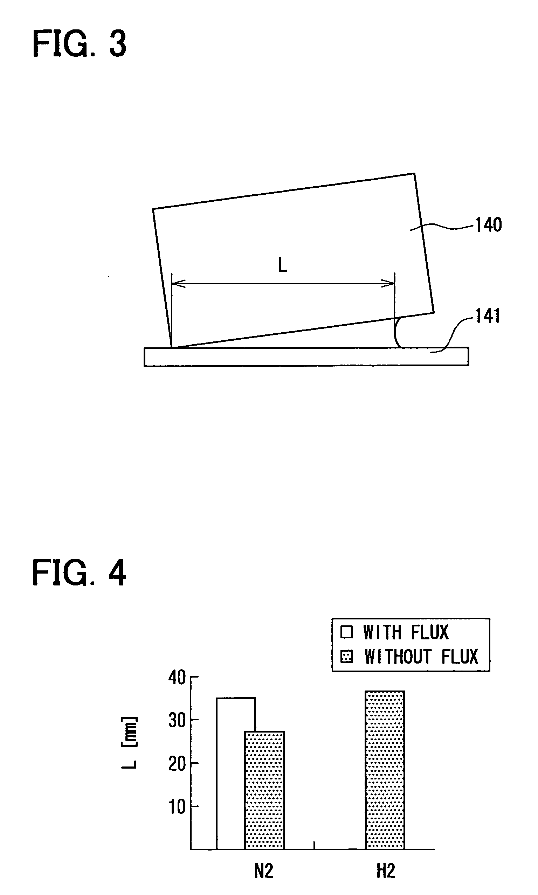

Figs. 3 and 4 explain a testing method for confirming the effect of the brazing method and a test result. Fig. 3 explains the testing method for confirming the effect. A clearance having a predetermined slant angle is provided between an upper test piece 140 and a lower test piece 141. Then, the brazing material 1 is sandwiched by the upper and lower test pieces 140, 141. A fillet length L of the brazing material 1, which is formed in the clearance, is measured. The fillet length L is defined as shown in Fig. 3.

Fig. 4 shows the result of the test. In the present method with using the hydrogen reducing furnace and without using flux, the fillet length L is obtained to be the same length as the conventional method with using the nitrogen furnace and with using flux. The actual brazing condition (i.e., the fixation) between the tube 112 and the core plate 114 is such that, in the conventional method, defective penetration of the brazing material is occurred in about one-third of the total number of joint of tube 112 and core plate 114. The defect is mainly occurred at a rounding portion (i.e., R portion) of the tube 112. However, in the present method, all fixations provide excellent penetration of the brazing material.

Further, since the brazing material is made of the Cu-Sn-Ni-P alloy, the melting point is lowered in the brazing process so that the reduction of strength of the components is prevented.

Although the reducing gas in the brazing process is the hydrogen gas, the reducing gas can be a carbon monoxide gas (CO) or the like.

Further, although the brazing method is used for the radiator 100 of the construction machine, the method can be used for another radiator of another four-wheel vehicle. Furthermore, the method can be used for another heat exchanger instead of the radiator 100, for example, an intercooler, a condenser, a heater core, an evaporator or the like.

Such changes and modifications are to be understood as being within the scope of the present invention as defined by the appended claims.

## Claims

1. A brazing method for brazing components (110-114, 120, 121, 130, 131), the method comprising the steps of:
coating a bonding portion between the components (110-114, 120, 121, 130, 131) with a brazing material (1) made of Cu-Sn-Ni-P alloy;
introducing reducing gas into a brazing furnace;
mounting the components (110-114, 120, 121, 130, 131) in the brazing furnace; and
increasing temperature in the brazing furnace so that the components (110-114, 120, 121, 130, 131) are brazed.

2. The method according to claim 1,
wherein the reducing gas is hydrogen gas or carbon monoxide gas.

3. The method according to claim 1 or 2,
wherein the components (110-114, 120, 121, 130, 131) are a part of a heat exchanger (100), in which inner fluid flows.

4. The method according to any one of claims 1-3,
wherein the brazing material (1) is made of Cu, 6 to 15wt.% of Sn, 5 to 7 wt.% of Ni, and 5 to 8 wt.% of P.

5. The method according to any one of claims 1-4,
wherein the temperature in the brazing furnace after the step of increasing the temperature is in a range between 600°C and 800°C.

6. The method according to any one of claims 1-5,
wherein the brazing material (1) has a melting point about 600°C.

7. The method according to any one of claims 1-6,
wherein the components (110-114, 120, 121, 130, 131) are a part of a radiator, an intercooler, a condenser, an evaporator or a heater core.

8. The method according to any one of claims 1-7,
wherein the components (110-114, 120, 121, 130, 131) are made of copper, copper based material, or brass based material.
